# EUROPEAN PATENT SPECIFICATION

(11) **EP 3 366 105 B1**
(45) Date of publication and mention of the grant of the patent: **04.03.2020**
(21) Application number: 17204471.1
(22) Date of filing: 29.11.2017
(51) Int. Cl.: A01D 43/063

(54) **RIDING-TYPE MOWER**
AUFSITZMÄHER
TONDEUSE AUTOPORTÉE

(30) Priority: 23.02.2017 JP 2017032214
(43) Date of publication of application: 29.08.2018
(73) Proprietor: Kubota Corporation, Osaka-shi, Osaka 556-8601 (JP)
(72) Inventor: KANAI, Toshiki, SAKAI-SHI, OSAKA, 590-0823 (JP); MIHARA, Akihito, SAKAI-SHI, OSAKA, 590-0823 (JP); NAGAISHI, Shoichiro, SAKAI-SHI, OSAKA, 590-0823 (JP); KIMURA, Arisa, SAKAI-SHI, OSAKA, 590-0823 (JP); AKITA, Masayuki, SAKAI-SHI, OSAKA, 590-0823 (JP); KAWAMOTO, Ryusuke, SAKAI-SHI, OSAKA, 590-0823 (JP)
(74) Representative: Cabinet Beau de Loménie

(56) References cited:
- EP-A1- 2 870 855
- JP-A- 2010 178 635

## Description

### BACKGROUND OF THE INVENTION

### 1. Field of the Invention

This invention relates to a riding-type mower.

### 2. Description of the Related Art

A riding-type mower noted above includes a traveling vehicle body having a driver's seat, a rollover protection structure, also known as ROPS, mounted at a rear portion of the traveling vehicle body, a mower unit mounted on the traveling vehicle body, and a grass collecting container supported by the traveling vehicle body at a rear portion thereof and configured to store grass clippings cut by the mower unit. The grass collecting container is supported by the traveling vehicle body to be switchably and pivotally elevated/lowered between an elevated discharging posture realized when the container is pivotally elevated about a pivot axis disposed at an upper portion of this grass collecting container and extending along a lateral width direction of the traveling vehicle body, and a lowered storing posture realized when the container is pivotally lowered about the pivot axis.

For instance, according to a riding-type mower disclosed in JP2010-178635A, a grass collecting container is supported by a traveling vehicle body at a rear portion thereof, and a ROPS is mounted between a driver's seat and the grass collecting container.

The ROPS consists of a pair of right and left base end portions and a portal-shaped frame portion extending continuously from upper ends of the right and left base end portions. The portal-shaped frame portion is formed to be collapsible to the rear side about a pivot point and can be switched between an erect posture oriented along the vertical direction and a rearwardly collapsed posture. The portal-shaped frame portion, when switched to the rearwardly collapsed posture, assumes a posture aligned with an upper face of a container body of the grass collecting container which face is placed in a rearwardly and upwardly sloped state.

According to the above-described riding-type mower, the ROPS includes a pair of right and left base end side ROPS portions protruding upwards from the traveling vehicle body, and a leading end side ROPS portion which is supported to the leading end portions of the pair of right and left base end side ROPS portions to be pivotally raised/collapsed, and is switchable between a use posture in which the leading end side ROPS portion is raised relative to the base end side ROPS portions and a storage posture in which the leading end side ROPS portion is collapsed to the rear side of the traveling vehicle body relative to the base end side ROPS portions. Then, during a work effected near a tree, the leading end side ROPS portion will be set to the storage posture, thus reducing possibility of the ROPS being accidentally hooked with the tree.

With use of the conventional technique relating to ROPS, when the leading end side ROPS portion is configured to be posture-changeable to the storage posture, the leading end side POPS portion assumes a posture aligned with the upper face of the grass collecting container. Therefore, with the above-described riding-type mower, when the leading end side ROPS posture is set to the storage posture and the grass collecting container is set to the elevated discharging posture, it is necessary to avoid accidental contact between the leading end side ROPS portion and the grass collecting container. For this reason, it is not possible to secure a large lower margin from the use posture of the leading end side ROPS portion when this ROPS posture is set to the storage posture. Namely, it is not possible to lower the leading end side ROPS portion sufficiently even when this leading end side ROPS posture is set to the storage posture.

In view of the above, there is a need for a riding-type mower that is configured to allow discharging of grass clippings from the grass collecting container by setting this container to the elevated discharging posture and that also allows lower positioning of the leading end side ROPS portion when set to the storage posture.
EP 2870855 discloses a riding type mower.

### SUMMARY OF THE INVENTION

In view thereof, a riding-type mower is provided as under:
A riding-type mower comprising:
a traveling vehicle body having a driver's seat;
a rollover protection structure, also known as ROPS, mounted at a rear portion of the traveling vehicle body;
a mower unit mounted on the traveling vehicle body;
a grass collecting container supported by the traveling vehicle body at a rear portion thereof and configured to store grass clippings cut by the mower unit;
the grass collecting container being supported by the traveling vehicle body to be switchably and pivotally elevated/lowered between an elevated discharging posture realized when the container is pivotally elevated about a pivot axis disposed upwardly of the grass collecting container and extending along a lateral width direction of the traveling vehicle body, and a lowered storing posture realized when the container is pivotally lowered about the pivot axis; and
the ROPS including a pair of right and left base end side ROPS portions protruding upwards from the traveling vehicle body, and a leading end side ROPS portion which is supported to the leading end portions of the pair of right and left base end side ROPS portions to be pivotally raised/collapsed, and is switchable between a use posture in which the leading end side ROPS portion is raised relative to the base end side ROPS portions and a storage posture in which the leading end side ROPS portion is collapsed to the rear side of the traveling vehicle body relative to the base end side ROPS portions;
wherein the leading end side ROPS portion includes a pair of right and left strut portions having base end portions supported at the leading end portions of the pair of right and left base end side ROPS portions, and a beam portion connected to leading ends of the pair of right and left strut portions;
wherein a distance between the pair of right and left strut portions is greater than a lateral width of the grass collecting container; and
wherein a free end side of the grass collecting container enters a space between the pair of right and left strut portions when the leading end side ROPS portion assumes the storage posture and also the grass collecting container assumes the elevated discharging posture.

With the above-described arrangement, even when the leading end side ROPS portion is set to the storage posture and the grass collecting container assumes the elevated discharging posture, since the free end side of the grass collecting container enters the space between the pair of right and left strut portions, accidental contact between the leading end side ROPS portion and the grass collecting container can be avoided. Thus, compared with the arrangement of the leading end side ROPS portion being aligned along the upper face of the grass collecting container, it is possible to secure a large lower margin from the use posture of the leading end side ROPS portion set to the storage posture.

Therefore, while discharging of grass clippings from the grass collecting container is allowed by setting this container to the elevated discharging posture, the arrangement still allows lower positioning of the leading end side ROPS portion when set to the storage posture. For instance, it is possible to effectively avoid accidental contact of the ROPS with a tree by setting the leading end side ROPS portion to the storage posture.

According to one preferred embodiment, the leading end side ROPS portion is supported to be posture-changeable to a second storage posture in which the leading end side ROPS portion is further pivotally lowered than the storage posture and is located on the rear side of the pair of right and left base end side ROPS portions along the base end side ROPS portions.

With the above-described arrangement, by setting the leading end side ROPS portion to the second storage posture, it is possible to reduce a protrusion length of the leading end side ROPS portion rearwardly from the strut portions, than the case of setting it to the storage posture where the free end side of the grass collecting container under the elevated discharging posture enters the space between the pair of right and left strut portions.

According to another preferred embodiment, the leading end side ROPS portion is located higher than the grass collecting container when the grass collecting container is set to the lowered storage posture and also the leading end side ROPS portion assumes the second storage posture.

With the above-described arrangement, by setting the leading end side ROPS portion to the second storage posture, it is possible to secure a larger space upwardly of the grass collecting container under its elevated discharging posture, than the case of setting it to the storage posture where the free end side of the grass collecting container under the elevated discharging posture enters the space between the pair of right and left strut portions.

According to still another preferred embodiment, the mower further comprises a pair of right and left brackets that are attached to the traveling vehicle body and that support the pair of right and left base end side ROPS portions detachably/attachablly and independently of each other; and
wherein the pair of right and left brackets include a holding portion configured to hold joint portions of the base end side ROPS portions when the joint portions are inserted into the pair of right and left brackets from above.

With the above-described arrangement, attachment and detachment of the ROPS is possible by the simple operation of inserting/withdrawing the joint portions of the base end side ROPS portions into/from the holding portion of the base end side ROPS portions.

### BRIEF DESCRIPTION OF THE DRAWINGS

Fig. 1 is a left side view of a riding-type mower according to one embodiment, showing in its entirety when a grass collecting container is set to a lowered storage posture and a leading end side ROPS portion is set to a use posture;
Fig. 2 is a left side view showing the riding-type mower in its entirety when the grass collecting container is set to an elevated discharging posture and the leading end side ROPS portion is set to a storage posture;
Fig. 3 is a left side view showing the riding-type mower in its entirety when the grass collecting container is set to the lowered storage posture and the leading end side ROPS portion is set to a second storage posture;
Fig. 4 is a plan view showing a support arrangement for the grass collecting container;
Fig. 5 is a side view showing support arrangements for the grass collecting container and a ROPS;
Fig. 6 is a section view showing a joint arrangement between brackets and base end side ROPS portions;
Fig. 7 is a front view showing the ROPS;
Fig. 8 is a left side view showing a supporting arrangement for the leading end side ROPS portion; and
Fig. 9 is a plan view showing the supporting arrangement for the leading end side ROPS portion.

### DETAILED DESCRIPTION OF PREFERRED EMBODIMENTS

Embodiments of a riding-type mower related to the present invention will be described next with reference to the accompanying drawings.

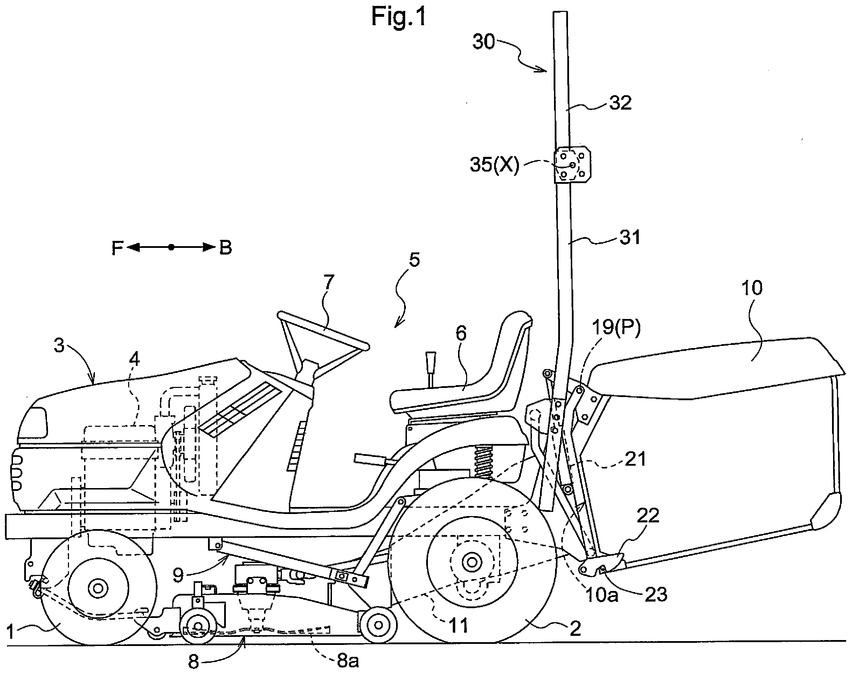

As shown in Figs. 1, 2 and 3, a direction [F] is defined to designate a front direction of a traveling vehicle body, a direction [B] is defined to designate a rear direction of the traveling vehicle body, a direction on the near side of the illustrations is defined to designate a left side direction of the traveling vehicle body, and a direction on the far side of the illustrations is defined to designate a right side direction of the traveling vehicle body, respectively.

### [General Configuration of Riding-type Mower]

As shown in Fig. 1, a riding-type mower includes a traveling vehicle body that mounts a pair of left and front wheels 1 which are steerable and a pair of right and left rear wheels 2 which are drivable. At a front portion of the traveling vehicle body, an engine section 3 is formed. An engine 4 is provided in the engine section 3. The traveling vehicle body travels as the rear wheels 2 are driven by power of the engine 4. At a rear portion of the traveling vehicle body, a driving section 5 is formed. In the driving section 5, there are provided a driver's seat 6 and a steering wheel 7. The traveling vehicle body is configured as a riding type as a person rides in the driving section 5 and steers the front wheels 1 by a rotational operation of the steering wheel 7. At a rear portion of the traveling vehicle body, a rollover protection structure, also known as ROPS 30, is provided. A mower unit 8 is supported at a portion of the traveling vehicle body between the front wheels 1 and the rear wheels 2. The mower unit 8 is supported by the traveling vehicle body via a link mechanism 9, so that in response to an elevating/lowering operation of the link mechanism 9, the mower unit 8 is operated up/down between a lowered work state and an elevated non-work state. To a rear portion of the traveling vehicle body, there is supported a grass collecting container 10. A duct 11 is provided between the mower unit 8 and the grass collecting container 10. The duct 11 extends between the right and left rear wheels 2.

When the traveling vehicle body is caused to travel with setting the mower unit 8 under the lowered work state, a grass cutting operation can be effected. Namely, in the mower unit 8, a rotary cutter blade 8a is rotatably driven by the power of the engine 4, so that grass is cut by the rotary cutter blade 8a. Cut grass clippings are transported by conveying air current generated with the rotation of the rotary cutter blade 8a through the duct 1 into the grass collecting container 10 to be stored therein.

### [Arrangement of Grass Collecting Container 10]

As shown in Figs. 1, 4 and 5, at a rear portion of the traveling vehicle body, there are provided a pair of right and left support frames 12 which extend along a vertical direction of the traveling vehicle body. The right and left support frames 12 are supported by a vehicle body frame 17 via a first joint frame 13, right/left second joint frames 14, a third joint frame 15 and right/left brackets 16. The first joint frame 13 joins lower portions of the right and left support frames 12. The third joint frame 15 joins the right and left brackets 16. The right/left second joint frame 14 join the first joint frame 13 to the third joint frame 15. Each bracket 16 is supported by the vehicle body frame 17 of the traveling vehicle boy via a joint members 16b.

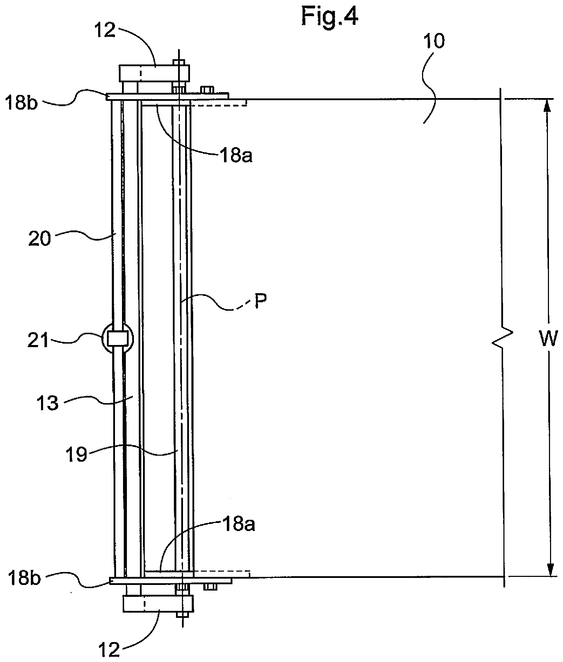

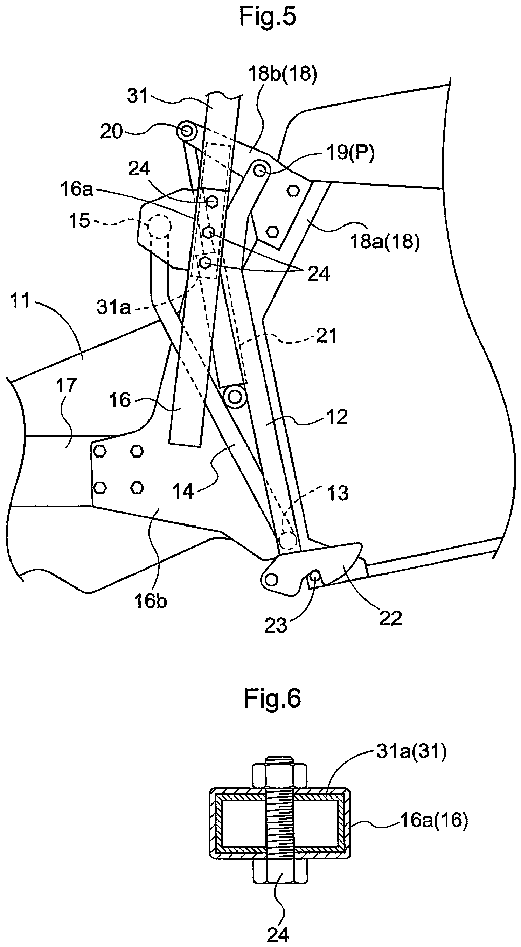

As shown in Figs. 4 and 5, support portions 18 are formed at right and left corners at the upper portion on the front end side of the grass collecting container 10. A support shaft 19 extends between the right and left support portions 18. The right and left support portions 18 consist of support members 18a fixed to the corner portions of the grass collecting container 10 and pivot links 18b to whose free ends the support members 18a are coupled, respectively. The grass collecting container 10 is supported by the right and left support frames 12 via the support shaft 19 to be vertically pivotable about an axis P that extends along a lateral width direction of the traveling vehicle body.

A coupling shaft 20 is operably coupled to the right and left pivot links 18b, and in turn the right and left pivot links 18b are operably coupled by the coupling shaft 20 to be pivotable together about the axis P acting as the pivot. Right and left lift cylinders 21 are operably coupled to the coupling shaft 20.

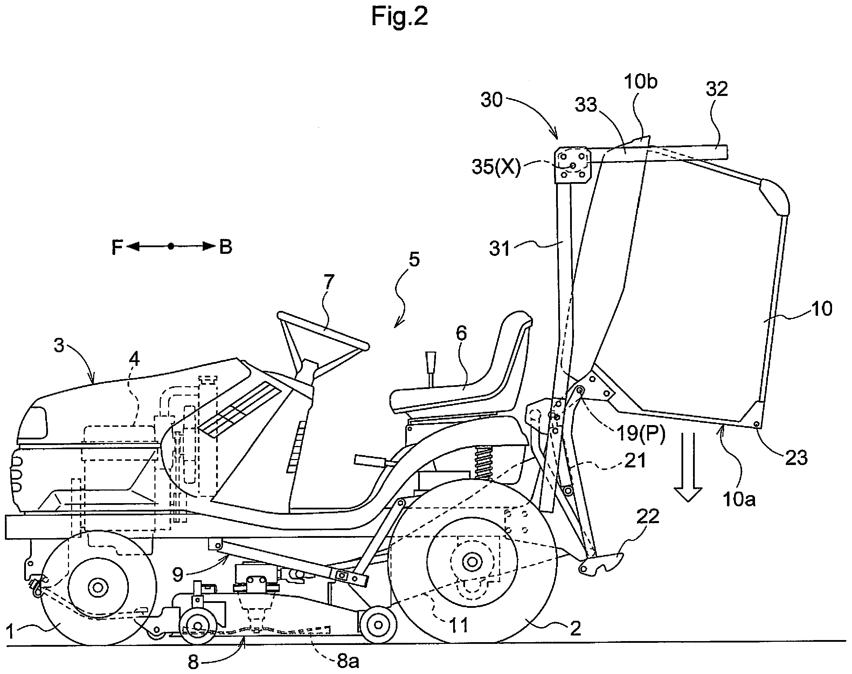

As the lift cylinders 21 are expanded/contracted, the pivot links 18b are pivoted up/down about the axis P by the lift cylinder 21, whereby the grass collecting container 10 is pivoted up/down together with the pivot links 18b. In this way, the grass collecting container 10 can be switched over in its posture between an elevated discharging posture (see Fig. 2) and a lowered storing posture (see Fig. 1).

The support members 18a and the pivot links 18b are connected to each other via connecting bolts. When the connection between the support members 18a and the pivot links 18b is released, the grass collecting container 10 can be detached from the support frames 12.

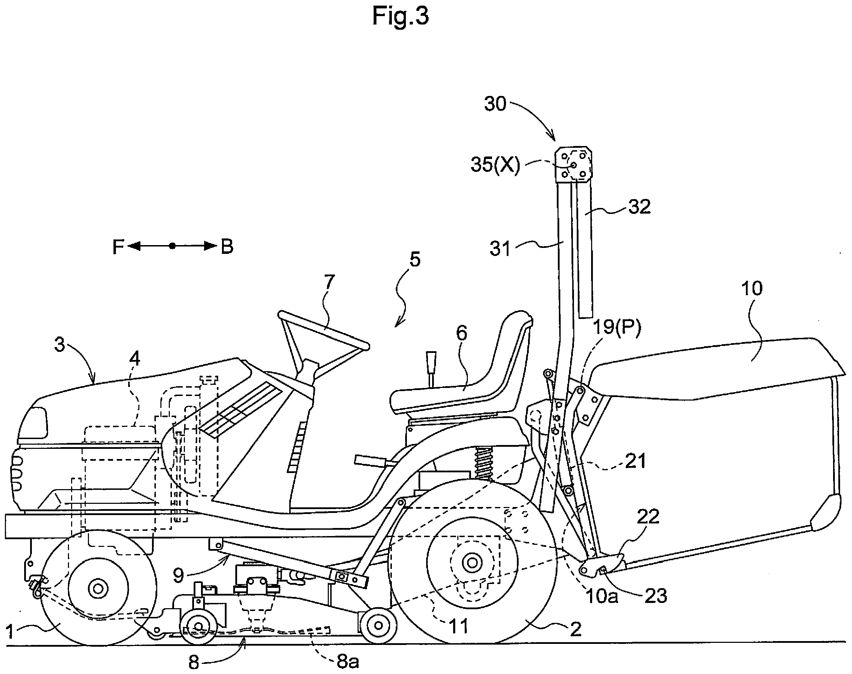

As shown in Figs. 1 and 3, when a grass cutting operation is to be effected, the lift cylinder 21 will be operated in advance to the storage side to set the grass collecting container 10 to the lowered storing posture. With this, the collector 10 will assume a mounted posture with its opening 10a facing forwardly of the vehicle body to face an exit of the duct 11, so that grass clippings cut by the mower unit 8 can be collected in the grass collecting container 10 to be stored therein. As shown in Fig. 5, a hook 22 is supported at a lower portion of the support frame 12 to be pivotally operable. When the grass collecting container 10 is set to the lowered storing posture, with engagement of the hooks 22 with lock pins 23 of the grass collecting container 10, the grass collecting container 10 can be locked to the lowered storing posture by the hooks 22.

As shown in Fig. 2, when the grass clippings have been stored in the grass collecting container 10, the lift cylinder 21 will be operated to the discharging side to set the grass collecting container 10 to an elevated discharging posture. Then, the rear side of the grass collecting container 10 will be elevated to assume a mounted posture with its opening 18b being oriented downwards. Then, the glass clippings inside the grass collecting container 10 will be allowed to drop under gravity to be discharged through the opening 10a.

### [Configuration of ROPS 30]

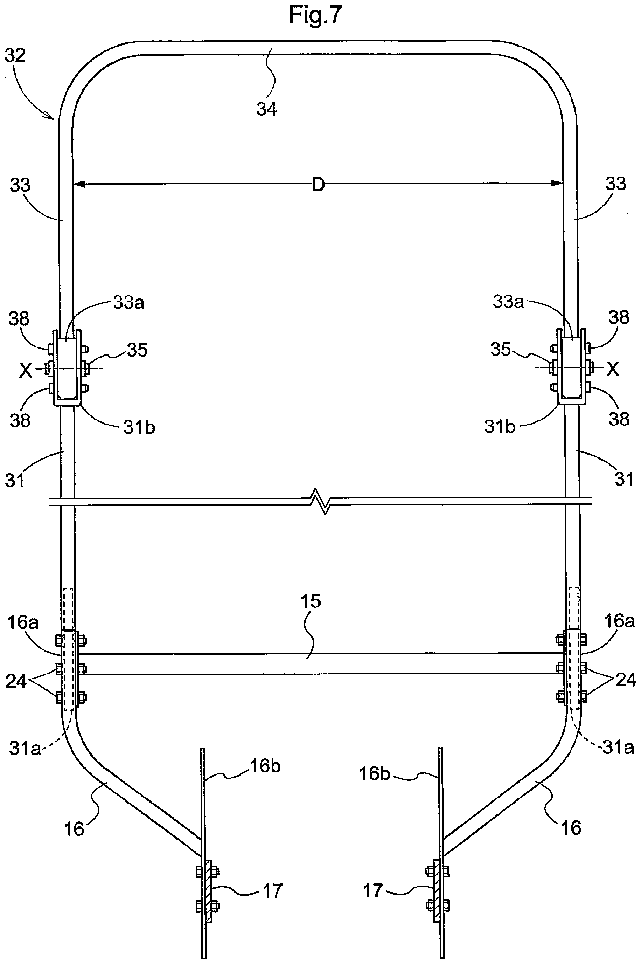

As shown in Fig. 1 and Fig. 7, the ROPS 30 includes a pair of right and left base end side ROPS portions 31 and one leading end side ROPS portion 32.

As shown in Figs. 5 and 7, a pair of right and left brackets 16 are supported via the joint members 16b by the right and left vehicle body frames 17 at the rear portions thereof. The brackets 16 are located more rearward than the rear wheels 2. The lower end portions of the right and left base end side ROPS portions 31 are supported by the brackets 16 at respective extension end portions thereof. The right and left base end side ROPS portions 31 are supported by the vehicle body frames 17 via the brackets 16, respectively, under a vertically oriented posture extending along the vertical direction of the traveling vehicle body.

As shown in Figs. 5-7, each joint portion 31a is formed at the base end portion of the base end side ROPS portion 31. At an end portion of the bracket 16, there is provided a vertically oriented tubular holding portion 16a extending along the vertical direction of the traveling vehicle body. When the joint portion 31a is inserted into the holding portion 16a from above and then detachably attachable stopper bolts 24 are attached to and between the holding portion 16a and the joint portion 31a, the base end side ROPS portion 31 is attachably/detachably supported by the bracket 16. When the right and left base end side ROPS portions 31 are attached/detached to/from the brackets 16 at respective positions rearwardly of the rear wheels 2, the ROPS 30 can be attached/detached.

As shown in Fig. 7, the leading end side ROPS portion 32 includes a pair of right and left strut portions 33, and a beam portion 34 connected to leading ends of the pair of right and left strut portions 33. Thus, the leading end side ROPS portion 32 as a whole is configured in U-shape, with a distance between the pair of right and left strut portions 33 being greater than a lateral width W of the grass collecting container 10 (see Fig. 4).

As shown in Figs. 7-9, right and left joint portions 33a are formed at respective lower ends of the right and left strut portions 33. Right and left support portions 31b are formed at respective upper ends of the right and left base end side ROPS portions 31. Between the right and left support portions 31b, the joint portions 33a are supported by the right and left support portions 31b via support shafts 35, respectively. The leading end side ROPS portion 32 is supported by the right and left support portions 31b at opposite ends thereof via the support shafts 35, to be pivotably operable about an axis X of the respective support shaft 35 extending in the lateral width direction of the traveling vehicle body.

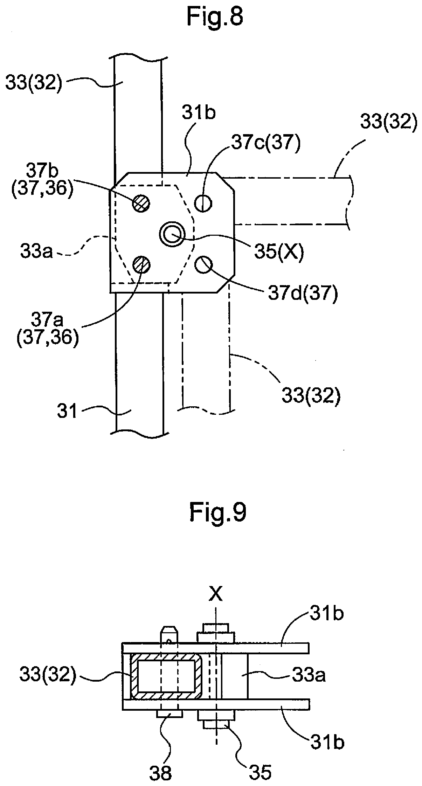

As shown in Fig. 8, each joint portion 33a defines two lock holes 36. Whereas, each support portion 31b defines four positioning holes 37. As shown in Fig. 1 and also denoted with solid lines in Fig. 8, in response to a pivotal operation on the leading end side ROPS portion 32, when the two lock holes 36 are put into registry with a first positioning hole 37a and a second positioning hole 37b of the four positioning holes 37, the leading end side ROPS portion 32 will be raised relative to the base end side ROPS portions 31, thus assuming a use posture. In this case, a detachable lock pin 38 will be fitted to/between the first positioning hole 37a and one lock hole 36, and another detachable lock pin 38 will be fitted to/between the second positioning hole 37b and the other lock hole 36. Whereby, the leading end side ROPS portion 32 can be locked under the use posture.

As shown in Fig. 2 and also denoted with one-dot chain lines in Fig. 8, alternatively, in response to a pivotal operation on the leading end side ROPS portion 32, when the two lock holes 36 are put into registry with the second positioning hole 37b and a third positioning hole 37c of the four positioning holes 37, the leading end side ROPS portion 32 will be collapsed in the rearward direction of the traveling vehicle body relative to the base end side ROPS portions 31, thus assuming a first storage posture. In this case, a detachable lock pin 38 will be fitted to/between the second positioning hole 37b and one lock hole 36, and another detachable lock pin 38 will be fitted to/between the third positioning hole 37c and the other lock hole 36. Whereby, the leading end side ROPS portion 32 can be locked under the first storage posture. When the leading end side ROPS portion 32 is set to the first storage posture and the grass collecting container 10 is set to the elevated discharging posture, a free end portion 10b of the grass collecting container 10 enters the space between the right and left strut portions 33 and also the free end side portion 10b of the grass collecting container 10 will protrude upwards beyond the right and left strut portions 33.

As shown in Fig. 3 and also denoted with two-dot chain lines in Fig. 8, still alternatively, in response to a pivotal operation on the leading end side ROPS portion 32, when the two lock holes 36 are put into registry with the third positioning hole 37c and a fourth positioning hole 37d of the four positioning holes 37, the leading end side ROPS portion 32 will be positioned along the base end side ROPS portions 31 on the rear side of the base end side ROPS portion 31, thus assuming a second storage posture which is more lowered than the first storage posture. In this case, a detachable lock pin 38 will be fitted to/between the third positioning hole 37c and one lock hole 36, and another detachable lock pin 38 will be fitted to/between the fourth positioning hole 37d and the other lock hole 36. With these, the leading end side ROPS portion 32 can be locked under the second storage posture. When the leading end side ROPS portion 32 is set to the second storage posture and the grass collecting container 10 is set to the lowered storage posture, the leading end side ROPS portion 32 will be located more upwards than the grass collecting container 10.

In the case of a work site where no obstacle is present above, by setting the leading end side ROPS portion 32 to the use posture, a grass cutting operation can be carried out with increasing the height of the ROPS 30.

On the other hand, in the case of a work site in vicinity of a tree, for instance, by setting the leading end side ROPS portion 32 to the first storage posture, the height of the ROPS 30 can be reduced, so that it becomes possible to carry out the cutting/mowing operation with readily avoiding accidental hooking of the tree with the ROPS 30. Moreover, even when the grass collecting container 10 is set to the elevated discharging posture, the free end side portion 10b of the grass collecting container 10 enters the space between the right and left strut portions 33 to prevent the grass collecting container 10 from coming into contact with the leading end side ROPS portion 32. Consequently, with setting the grass collecting container 10 to the elevated discharging posture, grass clippings can be discharged from this grass collecting container 10.

Further, by setting the leading end side ROPS portion 32 to the second storage posture, a grass cutting operation can be carried out with securing a large empty space above the grass collecting container 10 assuming the lowed storage posture. In this case, when grass clippings held inside the grass collecting container 10 are to be discharged, by elevating the leading end side ROPS portion 32 to the first storage posture or the use posture, the grass collecting container 10 can be elevated to its elevated discharging posture to allow the discharging.

### [Other Embodiments]

(1) In the foregoing embodiment, there was disclosed the arrangement that allows posture change of the leading end side ROPS portion 32 to the second storage posture. Alternatively, such posture change to the second storage posture can be disabled.
(2) In the foregoing embodiment, there was disclosed the example of providing the brackets 16. Alternatively, it is possible to employ an arrangement in which the base end side ROPS portions 31 are supported directly to the vehicle body frame 17, with omission of such brackets 16.
(3) In the foregoing embodiment, there was disclosed the example in which the mower unit 8 is provided between the front wheels 1 and the rear wheels 2. Alternatively, the mower unit 8 can be provided in any other location, such as a location forwardly of the front wheels 1, etc. That is, the present invention is applicable not only to a mid-mount type disclosed in the above embodiment in which the mower unit is mounted between the front wheels and rear wheels, but applicable also to a front-mount type in which the mower unit is mounted forwardly of the front wheels.

## Claims

1. A riding-type mower comprising:
a traveling vehicle body having a driver's seat (6);
a rollover protection structure (30) mounted at a rear portion of the traveling vehicle body;
a mower unit (8) mounted on the traveling vehicle body;
a grass collecting container (10) supported by the traveling vehicle body at a rear portion thereof and configured to store grass clippings cut by the mower unit (8);
the grass collecting container (10) being supported by the traveling vehicle body to be switchably and pivotally elevated/lowered between an elevated discharging posture realized when the container (10) is pivotally elevated about a pivot axis (P) disposed upwardly of the grass collecting container and extending along a lateral width direction of the traveling vehicle body, and a lowered storing posture realized when the container (10) is pivotally lowered about the pivot axis (P); and
the rollover protection structure (30) including a pair of right and left base end side rollover protection structure portions (31) protruding upwards from the traveling vehicle body, and a leading end side rollover protection structure portion (32) which is supported to the leading end portions of the pair of right and left base end side rollover protection structure portions (31) to be pivotally raised/collapsed, and is switchable between a use posture in which the leading end side rollover protection structure portion is raised relative to the base end side rollover protection structure portions (31) and a storage posture in which the leading end side rollover protection structure portion (32) is collapsed to the rear side of the traveling vehicle body relative to the base end side rollover protection structure portions (31);
wherein the leading end side rollover protection structure portion (32) includes a pair of right and left strut portions (33) having base end portions supported at the leading end portions of the pair of right and left base end side rollover protection structure portions (31), and a beam portion (34) connected to leading ends of the pair of right and left strut portions (33);
**characterized in that** a distance (D) between the pair of right and left strut portions (33) is greater than a lateral width (W) of the grass collecting container (10); and
wherein a free end side of the grass collecting container (10) enters a space between the pair of right and left strut portions (33) when the leading end side rollover protection structure portion (32) assumes the storage posture and also the grass collecting container (10) assumes the elevated discharging posture.

2. The riding-type mower according to claim 1, wherein the leading end side rollover protection structure portion (32) is supported to be posture-changeable to a second storage posture in which the leading end side rollover protection structure portion (32) is further pivotally lowered than the storage posture and is located on the rear side of the pair of right and left base end side rollover protection structure portions (31) along the base end side rollover protection structure portions (31).

3. The riding-type mower according to claim 2, wherein the leading end side rollover protection structure portion (32) is located higher than the grass collecting container (10) when the grass collecting container (10) is set to the lowered storage posture and also the leading end side rollover protection structure portion (32) assumes the second storage posture.

4. The riding-type mower of any one of preceding claims, wherein:
the mower further comprises a pair of right and left brackets (16) that are attached to the traveling vehicle body and that support the pair of right and left base end side rollover protection structure portions (31) detachably/attachably and independently of each other; and
wherein the pair of right and left brackets (16) include a holding portion (16a) configured to hold joint portions (31a) of the base end side rollover protection structure portions (31) when the joint portions (31a) are inserted into the pair of right and left brackets from above.

## Patentansprüche

1. Aufsitzmäher, umfassend:
eine fahrende Fahrzeugkarosserie mit einem Fahrersitz (6),
eine Überrollschutzstruktur (30), die an einem hinteren Abschnitt der fahrenden Fahrzeugkarosserie montiert ist,
eine Mäheinheit (8), die an der fahrenden Fahrzeugkarosserie montiert ist,
einen Grassammelbehälter (10), der von der fahrenden Fahrzeugkarosserie an einem hinteren Abschnitt davon getragen wird und dazu ausgestaltet ist, Grasabfälle zu lagern, die von der Mäheinheit (8) geschnitten werden,
wobei der Grassammelbehälter (10) von der fahrenden Fahrzeugkarosserie getragen wird, um umschaltbar und schwenkbar zwischen einer angehobenen Abladestellung, die realisiert wird, wenn der Behälter (10) schwenkbar um eine Schwenkachse (P) angehoben wird, die oberhalb des Grassammelbehälters angeordnet ist und sich entlang einer seitlichen Breitenrichtung der fahrenden Fahrzeugkarosserie erstreckt, und einer abgesenkten Lagerungsstellung, die realisiert wird, wenn der Behälter (10) schwenkbar um die Schwenkachse (P) abgesenkt wird, angehoben/abgesenkt zu werden, und
die Überrollschutzstruktur (30) ein Paar von rechten und linken Basisendseiten-Überrollschutzstrukturabschnitten (31), die nach oben von der fahrenden Fahrzeugkarosserie vorstehen, und einen Vorderendseiten-Überrollschutzstrukturabschnitt (32) beinhaltet, der an den Vorderendabschnitten des Paares von rechten und linken Basisendseiten-Überrollschutzstrukturabschnitten (31) abgestützt ist, um schwenkbar erhöht/zusammengefaltet zu werden, und zwischen einer Benutzungsstellung, in welcher der Vorderendseiten-Überrollschutzstrukturabschnitt relativ zu den Basisendseiten-Überrollschutzstrukturabschnitten (31) erhöht ist, und einer Lagerungsstellung, in welcher der Vorderendseiten-Überrollschutzstrukturabschnitt (32) zu der hinteren Seite der fahrenden Fahrzeugkarosserie relativ zu den Basisendseiten-Überrollschutzstrukturabschnitten (31) zusammengefaltet ist, umschaltbar ist,
wobei der Vorderendseiten-Überrollschutzstrukturabschnitt (32) ein Paar von rechten und linken Strebenabschnitten (33), die Basisendabschnitte aufweisen, die an den Vorderendabschnitten des Paares von rechten und linken Basisendseiten-Überrollschutzstrukturabschnitten (31) abgestützt sind, und einen Trägerabschnitt (34), der mit Vorderenden des Paares von rechten und linken Strebenabschnitten (33) verbunden ist, beinhaltet,
**dadurch gekennzeichnet, dass** ein Abstand (D) zwischen dem Paar von rechten und linken Strebenabschnitten (33) größer ist als eine seitliche Breite (W) des Grassammelbehälters (10), und
wobei eine freie Endseite des Grassammelbehälters (10) in einen Raum zwischen dem Paar von echten und linken Strebenabschnitten (33) eintritt, wenn der Vorderendseiten-Überrollschutzstrukturabschnitt (32) die Lagerungsstellung einnimmt und auch der Grassammelbehälter (10) die angehobene Abladestellung einnimmt.

2. Aufsitzmäher nach Anspruch 1, wobei der Vorderendseiten-Überrollschutzstrukturabschnitt (32) dazu abgestützt ist, zu einer zweiten Lagerungsstellung stellungsänderbar zu sein, in welcher der Vorderendseiten-Überrollchutzstrukturabschnitt (32) weiter schwenkbar als die Lagerungsstellung abgesenkt wird und sich an der hinteren Seite des Paares von rechten und linken Basisendseiten-Überrollschutzstrukturabschnitten (31) entlang der Basisendseiten-Überrollschutzstrukturabschnitte (31) befindet.

3. Aufsitzmäher nach Anspruch 2, wobei sich der Vorderendseiten-Überrollschutzstrukturabschnitt (32) höher als der Grassammelbehälter (10) befindet, wenn der Grassammelbehälter (10) auf die untere Lagerungsstellung gesetzt ist und auch der Vorderendseiten-Überrollschutzstrukturabschnitt (32) die zweite Lagerungsstellung einnimmt.

4. Aufsitzmäher nach einem der vorhergehenden Ansprüche, wobei:
der Mäher ferner ein Paar von rechten und linken Halterungen (16) umfasst, die an der fahrenden Fahrzeugkarosserie angebracht sind und die das Paar von rechten und linken Basisendseiten-Überrollschutzstrukturabschnitten (31) abnehmbar/anbringbar und unabhängig voneinander tragen, und
wobei das Paar von rechten und linken Halterungen (16) einen Halteabschnitt (16a) umfasst, der dazu ausgestaltet ist, Verbindungsabschnitte (31a) der Basisendseiten-Überrollschutzstrukturabschnitte (31) zu halten, wenn die Verbindungsabschnitte (31a) in das Paar von rechten und linken Halterungen von oben eingesetzt werden.

## Revendications

1. Tondeuse à gazon de type autoportée comprenant :
un corps de véhicule roulant ayant un siège de conducteur (6) ;
une structure de protection anti-retournement (30) montée au niveau d'une partie arrière du corps de véhicule roulant ;
une unité de tondeuse (8) montée sur le corps de véhicule roulant ;
un récipient de collecte de gazon (10) supporté par le corps de véhicule roulant au niveau d'une partie arrière de celui-ci et conçu pour stocker le gazon coupé par l'unité de tondeuse (8) ;
le récipient de collecte de gazon (10) étant supporté par le corps de véhicule roulant de façon à pouvoir être commuté et élevé/abaissé de manière pivotante entre une posture de décharge élevée, réalisée lorsque le récipient (10) est élevé de manière pivotante autour d'un axe de pivot (P) dressé vers le haut du récipient de collecte de gazon et s'étendant le long de la direction de la largeur latérale du corps de véhicule roulant et une posture de stockage abaissée, réalisée lorsque le récipient (10) est abaissé de manière pivotante autour de l'axe de pivot (P) ; et
la structure de protection anti-retournement (30) comprenant une paire de parties de structure de protection anti-retournement latérales d'extrémité de base droite et gauche (31) faisant saillie vers le haut à partir du corps de véhicule roulant et une partie de structure de protection anti-retournement latérale d'extrémité d'attaque (32) qui est supportée au niveau des parties d'extrémité d'attaque de la paire de parties de structure de protection anti-retournement latérales d'extrémité de base droite et gauche (31) de façon à être élevée/abaissée de manière pivotante et qui peut commuter entre une posture d'utilisation, dans laquelle la partie de structure de protection anti-retournement latérale d'extrémité d'attaque est élevée par rapport aux parties de structure de protection anti-retournement latérales d'extrémité de base (31) et une posture de stockage, dans laquelle la partie de structure de protection anti-retournement latérale d'extrémité d'attaque (32) est abaissée vers le côté arrière du corps de véhicule roulant par rapport aux parties de structure de protection anti-retournement latérales d'extrémité de base (31) ;
dans laquelle la partie de structure de protection anti-retournement latérale d'extrémité d'attaque (32) comprend une paire de parties d'étai droit et gauche (33) ayant des parties d'extrémité de base supportées au niveau des parties d'extrémité d'attaque de la paire de parties de structure de protection anti-retournement latérales d'extrémité de base droite et gauche (31), et une partie de poutre (34) reliée aux extrémités d'attaque de la paire de parties d'étai droit et gauche (33) ;
**caractérisée en ce qu'**une distance (D) entre la paire de parties d'étai droit et gauche (33) est supérieure à une largeur latérale (W) du récipient de collecte de gazon (10) ; et
dans laquelle un côté d'extrémité libre du récipient de collecte de gazon (10) entre dans un espace entre la paire de parties d'étai droit et gauche (33) lorsque la partie de structure de protection anti-retournement latérale d'extrémité d'attaque (32) adopte la posture de stockage et que le récipient de collecte de gazon (10) adopte également la posture de décharge élevée.

2. Tondeuse à gazon de type autoportée selon la revendication 1, dans laquelle la partie de structure de protection anti-retournement latérale d'extrémité d'attaque (32) est supportée de façon à pouvoir changer de posture vers une seconde posture de stockage dans laquelle la partie de structure de protection anti-retournement latérale d'extrémité d'attaque (32) est davantage abaissée de manière pivotante que dans la posture de stockage et est située sur le côté arrière de la paire de parties de structure de protection anti-retournement latérales d'extrémité de base droite et gauche (31) le long des parties de structure de protection anti-retournement latérales d'extrémité de base (31).

3. Tondeuse à gazon de type autoportée selon la revendication 2, dans laquelle la partie de structure de protection anti-retournement latérale d'extrémité d'attaque (32) est située plus haut que le récipient de collecte de gazon (10) lorsque le récipient de collecte de gazon (10) est configuré dans la posture de stockage abaissée et que la partie de structure de protection anti-retournement latérale d'extrémité d'attaque (32) adopte également la seconde posture de stockage.

4. Tondeuse à gazon de type autoportée selon l'une quelconque des revendications précédentes, dans laquelle :
la tondeuse comprend en outre une paire de supports droit et gauche (16) qui sont fixés au corps de véhicule roulant et qui supportent la paire de parties de structure de protection anti-retournement latérales d'extrémité de base droite et gauche (31) de manière à pouvoir être détachées/attachées et indépendante l'une de l'autre ; et
dans laquelle la paire de supports droit et gauche (16) comprend une partie de maintien (16a) conçue pour maintenir des parties d'articulation (31a) des parties de structure de protection anti-retournement latérales d'extrémité de base (31) lorsque les parties d'articulation (31a) sont insérées à l'intérieur de la paire de supports droit et gauche à partir du dessus.
